# EUROPEAN PATENT APPLICATION

(11) **EP 2 247 043 A1**
(43) Date of publication of application: **03.11.2010**
(21) Application number: 09305374.2
(22) Date of filing: 29.04.2009
(51) Int. Cl.: H04L 12/56

(54) **A method for controlling a packet routing device through a computer network**

(71) Applicant: Alcatel Lucent, 75008 Paris (FR)
(72) Inventor: Ronot, Benoit, 75013, Paris (FR); Ciavaglia, Laurent, 92120, Montrouge (FR)
(74) Representative: Brose, Gerhard

(57) **Abstract**

A method for controlling a routing of network device through a computer network, the method comprising the steps of maintaining a routing information base containing a record of routes from a network node to a plurality of network destinations, wherein the routing information base is managed by an operating system, in response to the network node receiving a data packet, selecting a path in the computer network along which to send the data packet toward a destination address, wherein the path is selected based on the routing information base, and forwarding the data packet from the network node to a next network node contained in the path, characterized in that the operating system is hosted on an adjacent network node, wherein the network node and the adjacent network node are attached to the computer network.

## Description

The invention relates to a method for controlling a networking device through a computer network according to the preamble of claim 1.

In computer science, routing is the process of selecting paths in a network along which to send network traffic. Routing is performed for many kinds of networks, including the telephone network, electronic data networks such as the Internet, and transportation networks (transport networks). This patent application is concerned primarily with the control aspects (including the routing, signaling, link management) of telecommunications networks.

In packet switching networks, routing directs forwarding, the transit of logically addressed packets from their source toward their ultimate destination through intermediate nodes; typically hardware devices called routers, bridges, gateways, firewalls, or switches. Ordinary computers with multiple network cards can also forward packets and perform routing, though they are not specialized hardware and may suffer from limited performance. The routing process usually directs forwarding on the basis of a routing information base (RIB, commonly called routing table) which maintains a record of the routes to various network destinations. Thus constructing routing tables, which are conventionally held in the router's memory, becomes very important for efficient routing.

In routing, a control plane is the part of the router architecture that is concerned with drawing the network map, or the information in a possibly augmented routing table that defines what to do with incoming packets. Control plane functions, such as participating in routing protocols, run in an architectural component called a control element. In most cases, the routing table will contain a list of destination addresses and the outgoing interfaces associated with them. Control plane logic also can define certain packets to be discarded, as well as preferential treatment of other packets for which a high quality of service is defined by such mechanisms as differentiated services.

Depending on the specific router implementation, there may be a separate Forwarding Information Base (FIB, commonly called forwarding table) that is populated, i.e., loaded, by the Control Plane. A separate forwarding plane uses either this FIB or accesses the routing table directly to look up a destination address for a packet arriving on an inbound interface.

The Forwarding and Control Element Separation network element (Forwarding and Control Element Separation = ForCES) described in Request for Comments 3746 by the Internet Engineering Task Force (IETF) gives an example of such architecture.

A downside of this state-of-the-art router architecture is the lack of control plane capabilities in many conventional network nodes. For example, a simple network node may be based on a specialized network processor or application-specific integrated circuit (ASIC). Such an element is ideally suited for hosting forwarding plane functionality such as per-packet processing and handling, but unable to provide control plane functionality such as the execution of control and signaling protocols. Transmission speed or bandwidth of a network node may be additional obstacles to the provisioning of a control plane. Also, the operating system of the node may prevent such use.

It is thus an object of the invention to provide a router architecture that overcomes the aforementioned deficiencies and allows to provide control plane functionality for network nodes with inadequate hardware or software support.

This object is achieved by a method according to claim 1.

A main idea of the invention is to shift control plane functionality to an adjacent network node comprising suitable hardware and software, the adjacent network node hosting an appropriate operating system for performing the tasks at hand.

Further developments of the invention can be gathered from the dependent claims and the following description.

In the following the invention will be explained further making reference to the attached drawing.

To control, according to an embodiment of the invention, a routing of network traffic through a computer network, a network node and an adjacent network node are attached to the computer network, the adjacent network node hosting an operating system for managing a routing information base. This routing information base contains a record of routes from the network node to a plurality of destinations. In response to receiving a data packet, the network node selects, based on the routing information base, a path in the computer network along which to send the data packet toward a destination address. Finally, the network node forwards the data packet to a next network node contained in this path. The aforementioned steps of selecting the path and forwarding the data packet are repeated for at least two data packets.

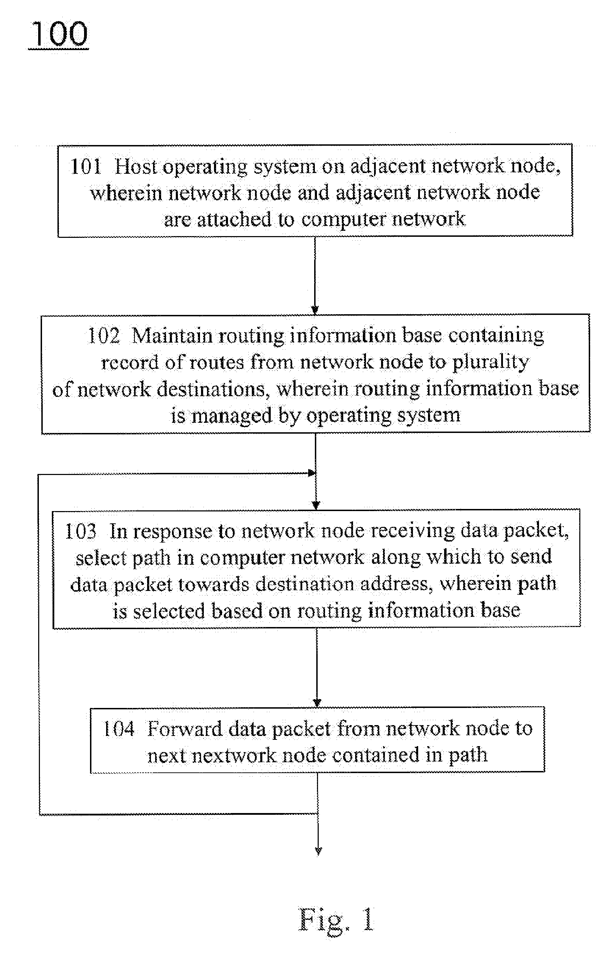

Fig. 1 shows a flowchart depicting a method according to an embodiment of the invention.

In the following, a method according to the invention is elucidated by way of example, referencing Fig. 1.

The flowchart 100 of Fig. 1 comprises a first step 101, a second step 102, a third step 103, and a forth step 104 mutually connected by arrows indicating a preferred order of execution. An additional forward arrow connects the forth step 104 with the third step 103, indicating a subsequent repetition of those steps.

In the first step 101, an adjacent network node hosts an operating system, wherein a network node and the adjacent network node are attached to a computer network. In computer networks and other communication networks, a node is an active electronic device that is attached to a network, and is capable of sending, receiving, or forwarding information over a communications channel. A network node thus is a connection point, either taking the form of a redistribution point, such as a router, firewall, load balancer, or Network Address Translation device (Network Address Translation = NAT), or a communication endpoint, i.e., some terminal equipment. By a computer network is meant a group of interconnected computers, that is, a collection of network nodes connected to each other. The network allows its elements to mutually communicate and share resources and information. The computer network connecting the network node and the adjacent network node may take the form of, inter alia, a local area network (LAN), a wide area network (WAN), a metropolitan area network (MAN), or a personal area network (PAN). Physically, the computer network may be based on, inter alia, optical fiber, Ethernet, wireless LAN, HomePNA, or power line communication. In terms of its topological layout, the computer network may take the form of, inter alia, a bus network, star network, ring network, mesh network, star-bus network, or hierarchical topology network, sometimes called a tree network.

In the embodiment at hand, the network node takes the form of a physical forwarding element (PFE), that is, an addressable entity that includes hardware used to provide per-packet processing and handling. The PFE at hand is based on ASIC technology. The adjacent network node takes the form of a physical control element (PCE), that is, an addressable entity that includes hardware used to provided control functionality. The PCE at hand is based on a general-purpose processor and capable of executing arbitrary operating systems and applications.

The network node and the adjacent network node may be directly coupled or connected via a number of intermediate hops, i.e. further network nodes, of the computer network.

In the second step 102, the operating system hosted in the first step 101 manages a routing information base containing a record of routes from the network node to a plurality of network destinations. Additionally, the adjacent network node hosts a further operating system, which is configured for managing a further RIB of the adjacent network node itself. The adjacent network node may host even further operating systems for managing even further RIBs of other unrelated network nodes.

To allow these multiple operating system environments to coexist on the adjacent network node in strong isolation from each other, the adjacent network node is configured to execute a system virtual machine. A system virtual machine, sometimes called hardware virtual machines, allows the sharing of the underlying physical machine resources of the adjacent network node between different virtual machines, each running its own operating system. The software layer providing the virtualization is called a virtual machine monitor or hypervisor. The hypervisor at hand takes the form of a type 1 hypervisor, sometimes called a native or bare-metal hypervisor. By a type 1 hypervisor is meant a virtualization platform that runs directly on the general-purpose processor of the adjacent network node as an operating system control program and allows the operating system and further operating system to run at the second level above the hardware. To allow for a seamless integration with the underlying hardware, the type 1 hypervisor may be embedded in a firmware of the adjacent network node.

To allow the hypervisor itself to run within an even further operating system, and thus allow additional applications to share the even further operating system hosting the hypervisor, an alternative embodiment may make use of a type 2 hypervisor, sometimes called a hosted hypervisor. In this case, the operating system and the further operating system run at the third level above the hardware. In the context of a type 2 hypervisor, the operating system and further operating system are typically referred to as guest operating systems, whereas the even further operating system hosting the hypervisor itself is typically referred to as a host operating system.

A further benefit of this approach is the independence of the further operating system from the operating system. In particular, the guest operating systems hosted by the system virtual machine of the adjacent network node may be different operating systems. For example, the operating system may be Linux, whereas the further operating system may be Microsoft Windows, both running on the same underlying hardware of the adjacent network node.

In the embodiment at hand, the hypervisor makes use of a virtualization technique commonly called full virtualization or native execution. In this case, the system virtual machine provides a complete simulation of the underlying hardware of the adjacent network node. A key challenge for full virtualization is the interception and simulation of privileged operations, such as input or output (I/O) instructions. This is to ensure that the effects of every operation performed within a given guest operating system must be kept within that guest operating system. In particular, virtual operations performed within the operating system cannot be allowed to alter the state of the further operating system, any other virtual machine, the hypervisor, or the hardware. Some machine instructions can be executed directly by the hardware of the adjacent network node, since their effects are entirely contained within the elements managed by the hypervisor, such as memory locations and arithmetic registers. Other instructions however cannot be allowed to execute directly; they must instead be trapped and simulated. Such instructions either access or affect state information that is outside the virtual machine. To support this technique, the adjacent network node used in the given embodiment comprises a microprocessor enabling virtualization in hardware, such as an Intel VT or AMD-V processor.

To allow for the use of an operating system that is adapted to be run on a different central processing unit architecture (central processing unit = CPU) than the one native to the adjacent network node, such as on the architecture of the network node itself, an alternative embodiment may make use of emulation to execute the non-native operating system on the system virtual machine of the adjacent network node. By emulation is meant the duplication of functions of the network node using the adjacent network node, so that the adjacent network node behaves like and, to the operating system, appears to be the network node. In this case, the system virtual machine effectively imitates properties of the network node, such that the adjacent network node can work with any operating system or other software designed for the network node itself. In contrast to the native execution employed by the embodiment at hand, the emulator of the alternative embodiment interprets the operating system and any further software based thereon in the light of the platform architecture that they were designed for. Apart from this interpretation of the network node's instruction set, specific hardware such as I/O devices of the network node is emulated as well to duplicate its behavior on the adjacent network node. In case of very similar platforms of the network node and adjacent network node, a simple compatibility layer translating system calls for the network node into native system calls for the adjacent network node may be sufficient to provide the emulation described above.

Bochs and QEMU are examples of system virtual machines that possess the ability to emulate a variety of guest CPU architectures on different host platforms.

To populate the RIB initially, the adjacent network node first collects configuration information for operating the network node. This step may be referred to as an auto-discovery or harvesting of the network node's configuration, and includes identifying the capabilities and constraints of that node. To this end, the network node maintains a management information base (MIB) comprising a collection of objects used to manage the network node. The MIB is a database defined as part of a network management model created by the International Organization for Standardization (ISO) under the direction of the Open Systems Interconnection group (Open Systems Interconnection = OSI). Objects in the MIB are defined using a subset of Abstract Syntax Notation One (ASN.1) that is described in Request for Comments 2578, "Structure of Management Information Version 2 (SMIv2)". See Request for Comments 1213, "Management Information Base for Network Management of TCP/IP-based internets", for a detailed discussion of MIBs.

To minimize the workload of the network node or consolidate management information relating to multiple devices in the computer network, the MIB may reside outside the network node without deviating from the spirit of the invention. Alternatively, the MIB may be a virtual database whose contents are distributed among multiple nodes of the computer network.

Once the required information has been obtained from the MIB, the adjacent network node creates a model of the network node to which the information pertains. To this end, the collected specifications of the network node are mapped to the control plane functionalities to be deployed on the adjacent network node. The RIB is ultimately based on the model thus generated. This technique may be referred to as auto-modeling.

In the given embodiment, the configuration information contained in the MIB is collected in band, that is, through the same channel that employed for user data packets. This in-band communication requires that the MIB be reachable through the computer network to which the network element and adjacent network element are attached. Since the computer network used with the embodiment is based on the Internet protocol suite (TCP/IP), the MIB is queried by means of the Simple Network Management Protocol (SNMP) as defined by the IETF.

In the third step 103, in response to receiving a data packet, the network node selects a path in the computer network along which to send the data packet toward a destination address, wherein the path is selected based on the routing information base. To avoid the requirement of having to configure individual cross-connects on the network node, the traffic path is provisioned by means of Generalized Multiprotocol Label Switching (GMPLS).

In the forth step 104, the network nodes forwards the data packet to a next network node contained in the path. To optimize the network node for a fast lookup of destination addresses, the given embodiment makes use of an FIB. To further minimize the time required for accessing the FIB, the network node is equipped with a Ternary Content-Addressable Memory (TCAM), that is, a special type of computer memory designed to be searched in a single processor operation.

The third step 103 and the forth step 104 are repeated for at least two data packets, i.e., at least twice. In the embodiment at hand, to allow for a continuous service of the network node, these steps are repeated as often as necessary to process any inbound data packet received by the network node, unless processing is terminated by an operator.

The method is implemented in a preferred embodiment through or together with a software program written in e.g. Very high speed integrated circuit Hardware Description Language (VHDL) or C, C++, Java, or using another programming language, or implemented by one or more VHDL, C, C++, or Java processes or routines, or several software modules being executed on at least one hardware device. Alternatively, the method is implemented in hardware only, e.g. making use of an ASIC. The described embodiments are to be considered in all respects only as illustrative and not restrictive. Furthermore, the order of the steps for performing the invention is not critical, and as can be understood by those skilled in the art, the order may vary without departing from the scope of the invention.

The network node and adjacent network node can be any kind of device which can be programmed including e.g. any kind of computer like a server or a personal computer, an FPGA, a processor, or the like, or any combination thereof, e.g. one processor and two FPGAs.

## Claims

1. A method for controlling a routing of network device through a computer network, the method comprising the steps of
maintaining (102) a routing information base containing a record of routes from a network node to a plurality of network destinations, wherein the routing information base is managed by an operating system,
in response to the network node receiving a data packet, selecting (103) a path in the computer network along which to send the data packet toward a destination address, wherein the path is selected based on the routing information base, and
forwarding (104) the data packet from the network node to a next network node contained in the path,
wherein the steps of selecting (103) the path and forwarding (104) the data packet are repeated for at least two data packets,
**characterized in that** the operating system is hosted (101) on an adjacent network node, wherein the network node and the adjacent network node are attached to the computer network.

2. A method according to claim 1, **characterized in that** the method further comprises the step of executing a further operating system, wherein the operating system and the further operating system are hosted (101) by means of a system virtual machine running on the adjacent network node, and wherein the further operating system is configured for managing a further routing information base containing a record of routes from the adjacent network node.

3. A method according to claim 2, **characterized in that**, in order to host (101) the operating system, the method comprises the step of emulating the network node on the adjacent network node.

4. A method according to claim 1, **characterized in that** the system virtual machine is monitored by either of the following:
a type 1 hypervisor and
a type 2 hypervisor.

5. A method according to claim 1, **characterized in that** the method further comprises the preceding steps of
collecting configuration information for operating the network node from a management information base and
based on the configuration information, creating a model of the network node on the adjacent network node,
wherein the routing information base is based upon the model of the network node.

6. A method according to claim 5, **characterized in that** the configuration information is collected through the computer network, wherein the management information base and the adjacent network node are attached to the computer network.

7. A method according to claim 6, **characterized in that** the configuration information is collected according to SNMP,
wherein the computer network is based on TCP/IP.

8. A method according to claim 1, **characterized in that** the path is selected (103) by means of Generalized Multiprotocol Label Switching.

9. A method according to claim 1, **characterized in that** the routing information base is managed by either of the following operating systems:
Alcatel-Lucent SR OS,
Cisco IOS,
Juniper Networks JUNOS,
Juniper Networks JUNOSe, and
Extreme Networks XOS.

10. A method according to claim 1, **characterized in that** the method further comprises the step of populating a forwarding information base based on the routing information base, wherein the forwarding information base is maintained on the network node and the selection (103) of the path is based on the forwarding information base.
